# EUROPEAN PATENT SPECIFICATION

(11) **EP 3 227 379 B1**
(45) Date of publication and mention of the grant of the patent: **29.07.2020**
(21) Application number: 15865094.5
(22) Date of filing: 02.12.2015
(51) Int. Cl.: C08L 3/00, C11D 1/62, C11D 3/48

(54) **QUATERNIZED STARCHES FOR USE AS ANTI-MICROBIAL AGENTS**
QUATERNISIERTE STÄRKEN ZUR VERWENDUNG ALS ANTIMIKROBIELLE WIRKSTOFFE
AMIDONS QUATERNISÉS DESTINÉS À ÊTRE UTILISÉS EN TANT QU'AGENTS ANTIMICROBIENS

(30) Priority: 02.12.2014 US 201462086308 P
(43) Date of publication of application: 11.10.2017
(73) Proprietor: B.G. Negev Technologies and Applications Ltd., at Ben-Gurion University, 8410501 Beer Sheva (IL)
(72) Inventor: KOST, Joseph, 8496500 Omer (IL); TRAITEL, Tamar, 8484102 Beer Sheva (IL); GOLDBART, Riki, 8533800 Lehavim (IL); BUARON, Nitsa, 7926000 (IL)
(74) Representative: Kalhammer, Georg
(86) International application number: PCT/IL2015/051170
(87) International publication number: WO 2016/088124

(56) References cited:
- WO-A1-2012/083497
- WO-A1-2012/083497
- WO-A1-2013/132061
- US-A1- 2005 054 609
- US-A1- 2005 222 085
- US-B1- 6 306 835
- UNDABEYTIA TOMAS ET AL: "Removal of waterborne microorganisms by filtration using clay-polymer compl", JOURNAL OF HAZARDOUS MATERIALS, ELSEVIER, AMSTERDAM, NL, vol. 279, 14 July 2014 (2014-07-14), pages 190-196, XP029056744, ISSN: 0304-3894, DOI: 10.1016/J.JHAZMAT.2014.07.006
- LUIS BASTARRACHEA ET AL: "Engineering Properties of Polymeric-Based Antimicrobial Films for Food Packaging: A Review", FOOD ENGINEERING REVIEWS, vol. 3, no. 2, 15 March 2011 (2011-03-15), pages 79-93, XP055484985, US ISSN: 1866-7910, DOI: 10.1007/s12393-011-9034-8 Retrieved from the Internet: URL:https://link.springer.com/content/pdf/ 10.1007%2Fs12393-011-9034-8.pdf>

## Description

### FIELD OF THE INVENTION

The present invention relates in general to an antimicrobial article comprising quaternized starch incorporated into a synthetic organic polymer material and to a method for manufacturing said antimicrobial article.

### BACKGROUND OF THE INVENTION

Infections by pathogenic microorganisms are of great concern in many fields, particularly in medical devices, drugs, surfaces/furniture, fabrics, dental restoration and surgery equipment, food packaging and storage, health care products, etc. To solve this problem in the food packaging and storage field, antimicrobial packaging, which are food-packaging systems that inhibit spoilage and reduce pathogenic microorganisms, have been developed. The packaging incorporated with antimicrobial additives helps to extend the shelf life of foods by prolonging the lag period of microorganisms, thereby diminishing their growth and number.

It is well-known that most bacterial cell walls are negatively charged, containing phosphatidylethanolamine (70%) as the major component and most antimicrobial polymers are positively charged. In this regard, polymers with quaternary ammonium groups are probably the most explored kind of polymeric biocides. The molecular weight of the polymer is perhaps one of the most important properties to consider when determining antimicrobial properties, because some are of the opinion that antimicrobial activity is markedly dependent on the polymer molecular weight.

Natural polysaccharide chitosan (poly-[1-4]-β-D-glucosamine) has been described as capable of inhibiting bacterial growth, this ability being attributed to the presence of amine groups in the polymer backbone (Tripathi et al, 2009, Park et al. 2010, Kannatt et al., 2012, Kong et al., 2010). Modified polysaccharides have also been described as having antimicrobial activity, as reported in Ebringerova *et al.* 1994 which discloses testing a series of quaternized D-xylan polysaccharides for antimicrobial activity against various bacteria and yeast, and in US6,306,835, which describes chitosan derivatives which exhibit antimicrobial activity.

In a review article, Bastarrachea et al., 2011, report on how the incorporation of antimicrobial substances into synthetic polymers such as PE, PP, PS, EVA. PVC, PA and PBAT affects the properties of food-packaging systems. According to the authors, the choice of antimicrobial polymeric film is based on the intended use of application, and hence depends on the properties of the polymeric films. In particular, the authors have studied mechanical, gas barrier, thermal, and morphological alterations.

### SUMMARY OF THE INVENTION

It has now been found, in accordance with the present invention, that quaternized starch exhibits antimicrobial activity.

The present invention provides
1. An antimicrobial article comprising quaternized starch incorporated into a synthetic organic polymer material.
2. The antimicrobial article of item 1, wherein the quaternized starch is present in the antimicrobial article at a concentration of 0.1% to 20% w/w.
3. The antimicrobial article of item 1, selected from a polymer film or sheet or a food packaging article produced from said polymer film or sheet.
4. The antimicrobial article of item 1, wherein said polymer material is selected from polyethylene, polypropylene, metallocene-polyethylene (mPE), and mPE grafted maleic anhydride, or a combination thereof.
5. The antimicrobial article of item 4, where said quaternized starch is quaternized corn or potato starch.
6. A method for manufacturing an anti-microbial article, the method comprising preparing an antimicrobial composition by incorporating quaternized starch into a synthetic organic polymer material, and producing an article from said antimicrobial composition.
7. The method of item 6, wherein the antimicrobial composition has a quaternized starch concentration of 0.1% to 20% w/w.

### BRIEF DESCRIPTION OF THE DRAWINGS

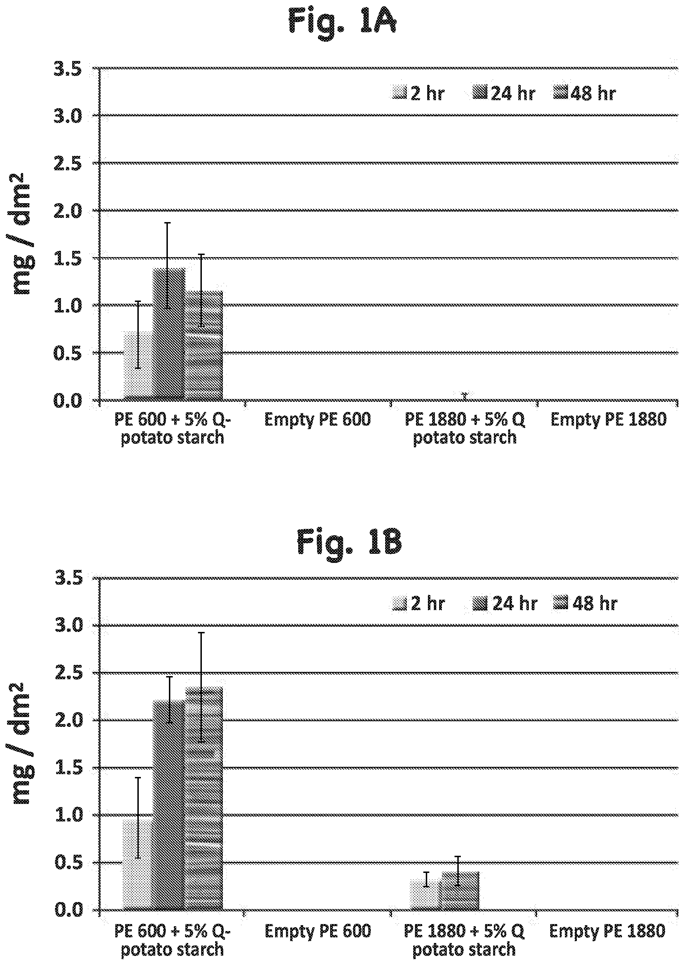

**Figs. 1A-1B** show Q-potato starch (quaternized potato starch) migration from polyethylene (PE) films a month after film production at room temperature (25°C) and at 60°C, respectively. Migration in mg/dm² was measured after 2 (left, light bar), 24 (middle, dark bar) and 48 (right, striped bar) hours of incubation in double distilled water (DDW), films were made from (left to rigth) LDPE Ipethene 600 + 5% Q-potato starch; LDPE Ipethene 600; 94% Affinity 1880+1% Bondyram 7103 + 5% Q-potato starch; and 94% Affinity 1880+1% Bondyram 7103.

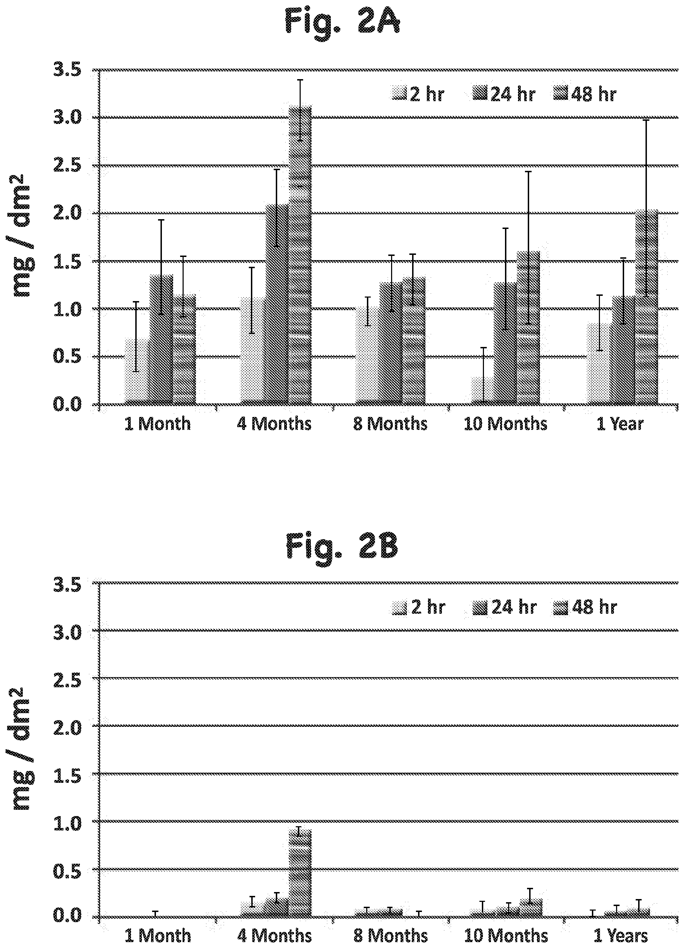

**Figs. 2A-2B** show Q-potato starch migration from the different polyethylene films at room temperature (25°C) with LDPE Ipethene 600 or 94% Affinity 1880+1% Bondyram 7103 as a polymer material, respectively. Migration in mg/dm² was measured after 2 (left, light bar), 24 (middle, dark bar) and 48 (right, striped bar) hours of incubation in DDW. The test was performed 1, 4, 8, 10 months or 1 year from film production.

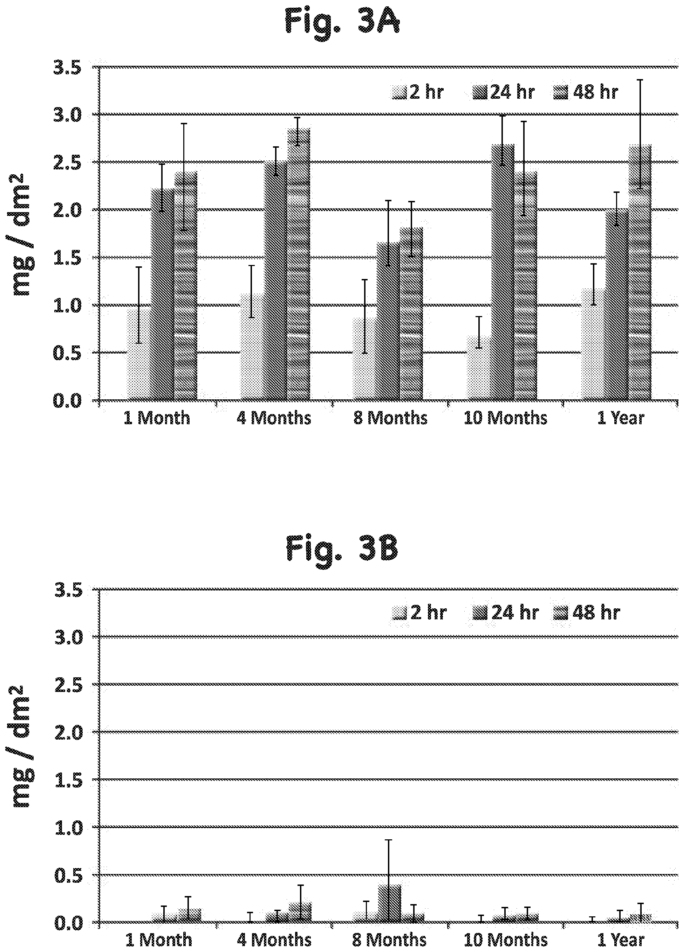

**Figs. 3A-3B** show Q-potato starch migration from polyethylene films at 60°C with LDPE Ipethene 600 or 94% Affinity 1880+1% Bondyram 7103 as a polymer material, respectively. Migration in mg/dm² was measured after 2 (left, light bar), 24 (middle, dark bar) and 48 (right, striped bar) hours of incubation in DDW. The test was performed 1, 4, 8, 10 months or 1 year from film production.

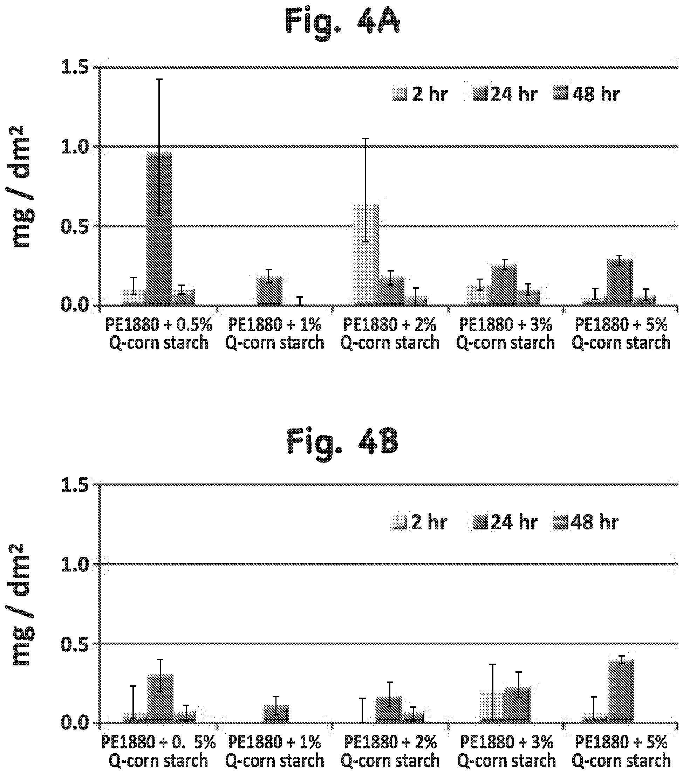

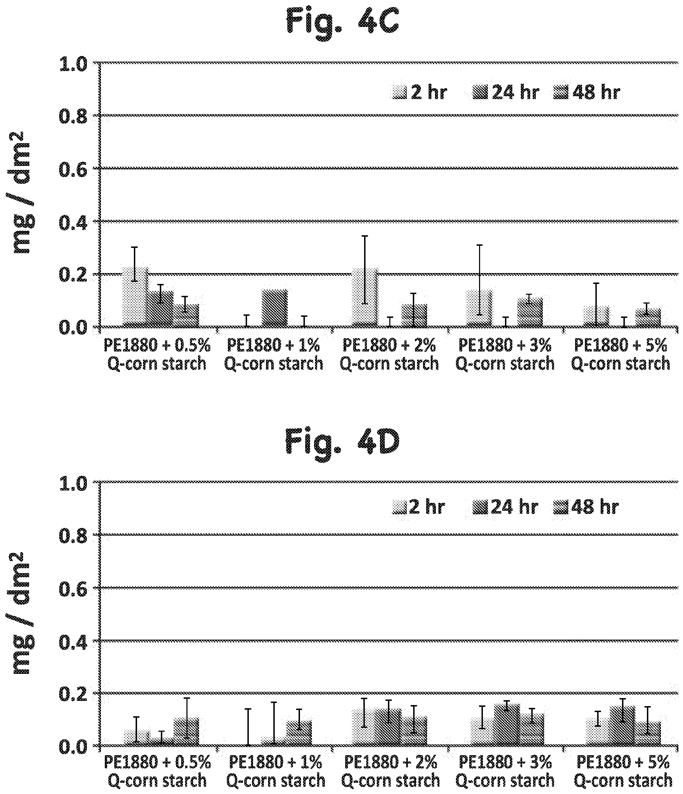

**Figs. 4A-4D** show Q-corn starch migration from polyethylene films Affinity 1880+1% Bondyram 7103 having (from left to right) 0.5%, 1%, 2%, 3%, or 5% of Q-corn starch. **(A)** at room temperature, one month from film production; **(B)** at 60°C, one month from film production; **(C)** at room temperature, 4 months from film production; **(D)** at 60°C, 4 months from film production. Migration in mg/dm² was measured after 2 (left, light bar), 24 (middle, dark bar) and 48 (right, striped bar) hours of incubation in DDW.

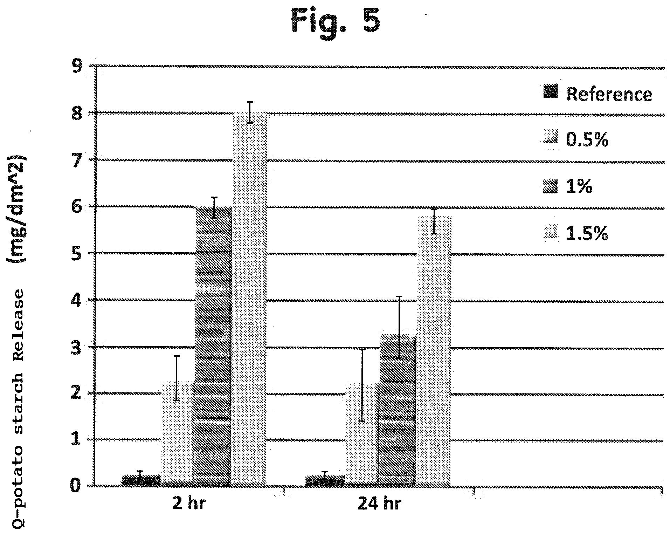

**Fig. 5** shows Q-potato starch migration from nonwoven polypropylene (PP) fabrics having (left to right) 0 (reference), 0.5%, 1%, or 1.5% Q-potato starch at room temperature, one month from antimicrobial fabric production. Migration in mg/dm² was measured after 2 (left cluster) and 24 hours (right cluster) of incubation in DDW.

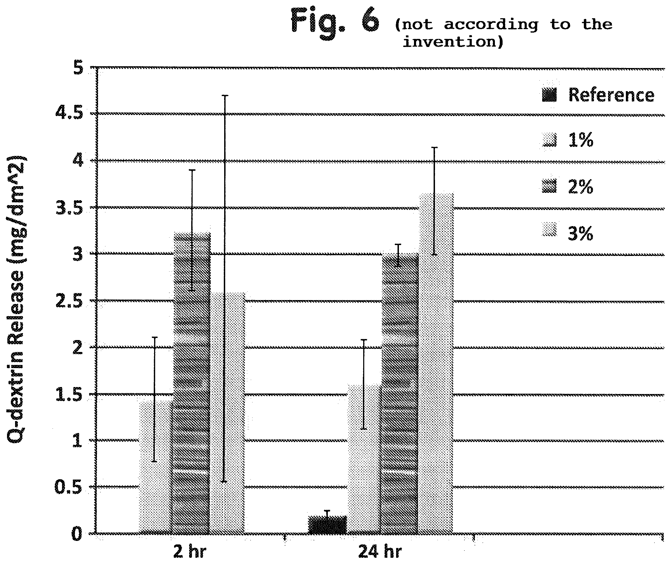

**Fig. 6** (not according to the invention) shows Q-dextrin migration from nonwoven PP fabrics having (left to right) 0 (reference), 1%, 2%, or 3% of Q-dextrin at room temperature, one month from antimicrobial fabric production. Migration in mg/dm² was measured after 2 (left cluster) and 24 (right cluster) hours of incubation in DDW.

### DETAILED DESCRIPTION OF THE INVENTION

In accordance with the present invention, a modified polysaccharide, which is quaternized starch, exhibits antimicrobial properties and can be used as antimicrobial agent in the antimicrobial article of the invention.

Therefore, according to one aspect, the present invention provides the use of quaternized starch as an antimicrobial agent in the antimicrobial article of the invention.

Starches from various sources can be used according to the invention. The major sources are cereals, e.g., rice, wheat, and maize, and root vegetables, e.g., potatoes, sweet potatoes and cassava.

As used herein, the term "modified polysaccharide" refers to a molecule of starch, chemically modified by substitution with one or more quaternary ammonium groups along the polysaccharide molecule. The amine groups may be derived from primary, secondary or tertiary amines comprising aliphatic, carbocyclic, aromatic and/or heterocyclic groups and having one to four amine functions. In certain embodiments, the amine group comprises one or more alkyl groups that may be substituted, for example, by halogen atoms, e.g., chloro, hydroxyl, alkoxy, and the like.

The ammonium groups along the quaternized starch may be one or more quaternary ammonium groups in which all the four hydrogen atoms are substituted with four organic groups.

Quaternization is the process of introducing quaternary ammonium groups to a polysaccharide. The hydroxyl groups of the polysaccharide are the site of incorporation of the ammonium groups, however, not all hydroxyl groups have the same likelihood of being modified by quaternization. For example, the hydroxyl groups of starch at the 2' and 6' positions of the glucose monomer are the most susceptible to quaternization among the hydroxyl groups of the glucose monomer.

Quaternization of polysaccharides can be performed by various well-known methods. The polysaccharide can be quaternized partially or to its full capacity. For example, fully quaternized starch has at least 3.5-4% nitrogen per monomeric unit, by weight. This most likely corresponds to quaternization on the 2' or 6' position on the glucose in all monomers.

Various types of starch can be modified and used in accordance with the present invention. For example, high molecular weight (MW) starches (10⁶-10⁸ Da) from potato, corn or rice, lower MW starches (10⁴-10⁵ Da), and very low MW starches (10³-10⁴ Da), which are obtained by cleavage, such as enzymatic cleavage or cleavage by ultrasound, of the starch before or after quaternization.

In certain embodiments, the modified polysaccharide used in the present invention is quaternized potato or corn starch. In certain embodiments, the potato or corn starch is quaternized with the quaternization reagent 3-chloro-2-hydroxypropyltrimethylammonium chloride and the products are herein identified as potato or corn "Q-starch".

In accordance with the present invention, the modified polysaccharide is for use as antimicrobial agent in the antimicrobial article of the invention but not for pharmaceutical use.

Therefore, the quaternized starch used in the present invention is suitable for use in a non-therapeutic method for killing microorganisms, inhibiting their growth, and/or preventing formation of a biofilm.

The terms "antimicrobial agent" and "antimicrobial additive" are used herein interchangeably to define the ability of the modified polysaccharide to kill microorganisms or inhibit their growth and/or prevent formation of a biofilm on a surface. By inhibiting growth it is meant reducing the number of viable cells, thereby reducing net growth in the number of viable cells, or reducing or halting the proliferation of the microorganism compared to microorganisms not treated by, or brought in contact with, said antimicrobial additive. In some embodiments, the reduction in viable cells may be by at least from one to at least four orders of magnitude compared to microorganisms not treated by said antimicrobial additive. The term "antimicrobial" also means having the ability to preserve, sanitize, disinfect or sterilize a contaminated surface or area through the killing of microorganisms. The terms "preserve", "sanitize", disinfect", and "sterilize", refer to the antimicrobial agent's ability to increasingly kill microorganisms, from a low kill rate (preservative) up to a complete destruction of all microorganisms (sterilization).

The antimicrobial agent used in the present invention is able to kill or inhibit the growth of a variety of microorganisms, such as bacteria, fungi, parasites, and viruses. In certain embodiments, the microorganism is a bacterium that can be gram positive or gram negative. In certain other embodiments, the microorganism is a fungus.

In order to strengthen and/or broaden their antimicrobial activity, the modified polysaccharide used in the present invention can be used in a mixture of two or more modified polysaccharides selected from starch, amylose, amylopectin and dextrin substituted with one or more amine and/or ammonium groups. These mixtures of modified polysaccharides may comprise mixtures of different modified polysaccharides due to different modifications on the same polysaccharide or same or different modifications on polysaccharides from different sources or of different lengths.

In order to strengthen and/or broaden its antimicrobial activity, the modified polysaccharide used in the present invention can be used together with one or more additional antimicrobial agents such as 4,5-dichloro-N-octyl-4-isothiazolin-3-one. Such combinations can, for example, prevent the growth of different types of microorganisms. For example, a modified polysaccharide that is capable of inhibiting the growth of gram positive and gram negative bacteria, may be used together with an antifungal agent.

Examples of applications for which the antimicrobial modified polysaccharide can be used include, without being limited to, packaging, such as cardboards, wrapping films, food containers and food packaging; housewares products such as, for instance, cutting boards, wall coverings, appliances, toilet seats, diapers, flooring, mattresses and paint; products/devices for medical applications, for example stents, cardiac assist devices, electrosurgical tools, catheters, elastomeric seals, needles, medical dressing, e.g., wound dressing, disposable sheets, lab coats and epidural probes; commercial products, for example PVC blinds, car interiors, packaging, signs, electronics and seating; apparel products, such as fitness mats, sports jackets, duffel bags and footwear; and building products such as vinyl sliding doors or windows, insulation and piping.

The antimicrobial modified polysaccharide used in the present invention can be applied to a surface thereby killing, preventing or inhibiting microorganisms growth on said surface, and/or preventing biofilm formation on said surface.

In certain embodiments, the present invention is concerned with reducing microbial contamination of organic materials, including but not limited to the processing and storage of foodstuffs. Other uses include treating bio-fouling problems associated, for example, with the production of a biofilm on marine and industrial equipment.

For such purposes, the present invention relates to the incorporation of the modified polysaccharide antimicrobial agent into polymeric materials as described below, such that the activity of the agents will reduce the microbial contamination of the organic material with which it comes in contact.

In a certain embodiment, for the production of plastic food wrappers, the antimicrobial agent is mixed with polymer compositions during formation of the plastic film or sheet and molded containers and thereafter reduce or destroy the bacteria on that portion of the foodstuffs with which it comes into contact. Plastic sheeting for food wrappers and plastic containers are only two specific applications for the antimicrobial agents of the present invention.

As shown in Examples 1 and 2 herein, quaternized potato starch and quaternized corn starch, respectively, blended with the plastic material low-density polyethylene (LDPE), could be extruded to form an antimicrobial film shown to be able to inhibit growth of gram negative and gram positive bacteria, and to inhibit the formation of biofilm on the surface of the antimicrobial film.

In certain embodiments, instead of mixing the antimicrobial agent with the polymeric composition as described above, a fabric such as a knit, woven or non-woven fabric is first prepared, for example, from a polymeric composition, and then the fabric is coated with, soaked or dipped in a solution comprising the antimicrobial agent, such that the antimicrobial agent is absorbed into the fabric and thus an antimicrobial fabric having the antimicrobial agents incorporated or embedded into it is obtained.

As shown in Examples 4 and 5 herein, polypropylene nonwoven fabric was soaked in a solution of quaternized starch or of quaternized dextrin, and was shown to be able to inhibit growth of gram negative and gram positive bacteria, and in some cases also to inhibit the formation of biofilm on the surface of the antimicrobial fabric.

In some embodiments, a sponge or foam having incorporated the antimicrobial agent is obtained by coating, soaking or dipping a sponge or a foam in the antimicrobial agent.

The fabric can be prepared from various materials, including natural fibers such as cotton, wool or fleece, and fibers made from polymeric materials as described below, such as polyester and polyamides, and combinations thereof. Similarly, the sponge or foam may be made from suitable materials, such as polymeric materials as described herein.

Thus, in certain embodiments, the antimicrobial modified polysaccharide used in present invention can be applied to a fabric, foam or sponge by soaking or dipping the fabric, foam or sponge in a solution of the antimicrobial polysaccharides, thereby killing, preventing or inhibiting microorganisms growth on the fabric, foam or sponge, and/or preventing biofilm formation on the fabric, foam or sponge.

In another aspect, the present invention provides a composition comprising a polymer material blended with the antimicrobial modified polysaccharide.

The polymer material for all aspects described above may be any synthetic organic polymer suitable for the production of polymeric articles. Both thermoplastic and thermosetting polymers can be used to produce antimicrobial articles according to the invention. Examples of such polymers include, without being limited to, polyethylene (PE) such as low-density polyethylene (LDPE), linear low-density polyethylene (LLDPE) or high-density polyethylene (HDPE), metallocene-polyethylene (mPE), mPE grafted maleic anhydride (mPE-g-MA), polypropylene, polystyrene, polyvinyl chloride (PVC), polyvinyl alcohol, polyacrylonitrile, polyamides such as nylon, polyethylene terephthalate, polyesters, acrylonitrile butadiene styrene (ABS) terpolymer, polycarbonate, polyacrylic acid, polymethylmethacrylate, polysulfone, polyurethane, polyurethane, latex and the like.

In certain embodiments, the composition of the invention comprises a polymer material selected from polypropylene, polyethylene (PE), metallocene-polyethylene (mPE), or mPE grafted maleic anhydride (mPE-g-MA) blended with said at least one antimicrobial modified polysaccharide. In certain embodiments, the polyethylene is LDPE or LLDPE and the antimicrobial modified polysaccharide is quaternized corn or potato starch.

The modified polysaccharide can be present in the antimicrobial polymer composition in a range of concentrations. In certain embodiments, the modified polysaccharide is present at a concentration of from about 0.1 to about 20%, from about 0.5 to 10%, from about 1 to about 5%, 1%, 2%, 3%, 4% or 5% w/w.

The term "about" as used herein, means that values that are 10% or less above or below the indicated values are also included.

In a further aspect, the present invention provides an antimicrobial article produced from the composition of the invention described hereinabove. Examples of said antimicrobial articles include, without being limited to, polymer films or sheets or food packaging articles produced from said polymer film or sheet or a 3-dimensional articles molded from said antimicrobial polymer composition.

In an additional aspect, an antimicrobial fabric produced by soaking or dipping a fabric in a solution including at least one modified polysaccharide as described above is disclosed herein. Additionally, an antimicrobial sponge or foam produced by soaking or dipping a sponge or a foam in a solution including at least one modified polysaccharide as described above is disclosed herein.

Accordingly, in yet another aspect, the present invention provides the use of the modified polysaccharide for producing an article, wherein said modified polysaccharide is quaternized starch.

In still a further aspect (not according to the invention), a method for killing microorganisms, inhibiting their growth or for preventing formation of a biofilm, comprising coating on a surface or embedding in a fabric, foam or sponge an antimicrobial composition comprising at least one modified polysaccharide selected from starch, amylose, amylopectin and dextrin or combinations thereof substituted with amine and/or ammonium groups, on said surface, optionally mixed with glue or solvent is disclosed herein.

In an additional aspect (not according to the invention), a method of producing an anti-microbial surface, fabric, foam or sponge, comprising coating a surface with, or embedding in a fabric, foam or sponge, an antimicrobial composition comprising at least one modified polysaccharide selected from starch, amylose, amylopectin and dextrin or combinations thereof substituted with amine and/or ammonium groups, optionally mixed with glue or solvent is disclosed herein.

In still a further aspect, the present invention provides a method for producing an article, comprising preparing an antimicrobial composition comprising a polymer material and quaternized starch, and producing an article from the antimicrobial composition for use in a method for killing microorganisms, inhibiting their growth, and/or preventing formation of a biofilm (not according to the invention).

In yet another aspect, the present invention provides a method for manufacturing an anti-microbial article, comprising preparing an antimicrobial composition comprising a polymer material and quaternized starch and producing an article from said antimicrobial composition.

The application of the antimicrobial agent to a surface is performed by any of a variety of methods known in the art. For example, the antimicrobial additive can be applied to a surface by spreading, printing, spraying or coating the surface with a composition comprising the antimicrobial additive, or by chemical grafting techniques, layer by layer deposition, or plasma polymerization. Coating of the surface can be carried out with a composition further containing an adhesive such as a glue.

In certain embodiments, the surface to which the antimicrobial agent is applied is a surface of packaging or wrapping materials such as food packaging.

According to certain embodiments, the antimicrobial composition comprises quaternized corn or potato starch or dextrin.

The invention will now be illustrated by the following non-limiting examples.

### EXAMPLES

### Materials and Methods

***Preparation of quaternized starch or dextrin*** : Starch/dextrin/amylose modification with quaternary amine groups to obtain quaternized starch/dextrin/amylose (Q-starch/Q-dextrin/Q-amylose) was carried out according to Geresh S. et al., "Chemical Modifications of Biopolymers: Quaternization of the Extracellular Polysaccharide of the Red Microalga Porphyridium sp.", *Carbohydrate Polymers* **43**(1):75, 2000. Briefly, 500 mg of polysaccharide (Sigma, potato starch S-2630, 3x10⁶ Da; corn starch S-4126, 1x10⁸ Da; Fluka, potato dextrin cat. No. 31405, 2x10⁴ Da; Sigma, corn amylose A-7043 1.5x10⁶ Da) were dissolved in 10 mL of NaOH (sodium hydroxide, Sigma, S-0399) solution (0.19 g/mL) for 30 min at room temperature, to obtain homogenous polysaccharide solution at concentration of 50 mg/mL. 8 mL of the quaternization reagent, 3-chloro-2-hydroxypropyltrimethylammonium chloride (Sigma-Aldrich, 348287) were dissolved in 20 mL of distilled water (DW) (0.32 g/mL) and added gradually to the polysaccharide solution. The reaction volume was continuously stirred for 20 h at room temperature. Precipitate solution was prepared by mixing 118.4 ml acetone (Frutarom, 2355008), 40 ml ethanol (Bio Lab Ltd., Israel, 200-578-6) and 1.6 ml of 32% HCl (Bio Lab Ltd., 231-595-7).

One volume of product was precipitated by adding 4 volumes of acidified (1% HCl) mixture of ethanol and acetone (1:3 vol. %), slowly under constant stirring. The precipitate was washed 4 times with 25 mL of 80% ethanol (100 mL total washing volume), dissolved in a small volume (1-2 mL) of DW, and poured into an 11 kDa cutoff dialysis bag that was placed in a vessel containing 5 L of DW. The water was replaced 4 times with fresh DW during 48hr of dialysis. The dialyzed product was then dried by lyophilization.

***Preparation of Polyethylene*/*Q-potato starch compositions and films therefrom:*** The polymer materials used in this experiment were a commercially available grade of low density polyethylene (LDPE, Ipethene® 600 of Carmel Olefins Ltd. Israel), metallocene-polyethylene (mPE) (Affinity™ PL 1880, Dow Chemical), and metallocene-polyethylene (mPE) grafted maleic anhydride (mPE-g-MAH) (Bondyram® 7103, Polyram).

The compositions were produced by melt mixing in a Prism Eurolab Digital 16 XL twin screw co-rotating extruder (D = 16 mm, L/D = 24), using a temperature profile of 140, 150, 150, 150, 150 and 150°C at the die, and operated at a screw speed of 250 rpm, to obtain 100 gr batch size compositions. The polyethylene and the Q-potato starch were physically mixed according to the formulations required, and added to the extruder at the same upstream feed port. The melt composition strands were continuously cooled down to solidify under water at 23°C, then cut to granules with granulating machine. The prepared material samples were labeled as follows:
1. 95% Ipethene 600 + 5% potato Q-starch
2.94% Affinity 1880 + 1% Bondyram 7103 +5% potato Q-starch

For the film preparation, the pre-compounded material samples 1 and 2 above were dried before further processing and then fed to Randcastle Microtruder cast film single screw extruder (D = 19 mm, L/D = 20), after a 2 hours/70°C vacuum drying, under the following conditions, to obtain polyethylene films of about 50-70 micron wall thickness and a width of 150 mm:
1. temperature profile of 140, 150,160,160,160,160°C and screw speed of 60 rpm;
2. temperature profile of 160, 170,170,170,170,170°C and screw speed of 70 rpm.

***Preparation of Polyethylene*/*Q-corn starch compositions and films therefrom:*** The polymer materials used in this experiment were metallocene-polyethylene (mPE) (Affinity™ PL 1880, Dow Chemical), and metallocene-polyethylene (mPE) grafted maleic anhydride (mPE-g-MAH) (Bondyram® 7103, Polyram).

Five sample compositions were produced as described above for potato starch and labeled as follows:
3. 94% Affinity 1880 + 1% Bondyram 7103 + 5% corn starch
4. 96% Affinity 1880 + 1% Bondyram 7103 + 3% corn starch
5. 97% Affinity 1880 + 1% Bondyram 7103 + 2% corn starch
6. 98% Affinity 1880 + 1% Bondyram 7103 + 1% corn starch
7. 98.5% Affinity 1880 + 1% Bondyram 7103 + 0.5% corn starch

For the film preparation, the pre-compounded material samples 3 to 7 were dried before further processing and then fed to Randcastle Microtruder cast film single screw extruder (D = 19 mm, L/D = 20), after a 2 hours/70°C vacuum drying at a temperature profile of 160, 170,170,170,170,170 °C, and screw speed of 60 rpm, to obtain polyethylene films of about 50 micron wall thickness and a width of 150 mm.

### Preparation of Polyethylene/Q-polysaccharide compositions and films therefrom for Example 3:

The polymer material used in this example was a commercially available grade of low density polyethylene (LDPE, Ipethene® 600 of Carmel Olefins Ltd. Israel). A composition of Q-polysaccharide and LDPE 600 was made in Thermo Haake Rheocord machine at 125 °C, 100 RPM and 7 min mixing time. The composition contained 50 gr of LDPE 600 and 3 different concentrations of Q-polysaccharide: 0.5%, 2.5% and 5% by weight. To prepare the films, following preparation of the composition 1 g of each composition was pressed in a Collin P 200 E machine at 125 °C and 1.8 bars.

***Quaternized polysaccharide calibration curve:*** Lugol's solution (Sigma, L6146), a solution of elemental iodine and potassium, served as a reagent for quaternized polysaccharide detection. 20.3 mg quaternized polysaccharide were mixed in 50 ml of distilled water (DW) to form a concentrated quaternized polysaccharide solution. Dilutions were made to concentrations between 0.1-50 ppm in 15 ml DW. 500 µl of Lugol's solution were added to each of the diluted solutions, and tested in a spectrophotometer at 550 nm.

***Evaluation of quaternized polysaccharide migration from polyethylene films:*** Disks, 2 cm in diameter, were cut from each of the films tested. The weight of each disk was evaluated, and every two disks were placed in 10 ml DDW in a vial. The migration tests were performed at two settings: incubation at room temperature (25°C and 150 rpm), and incubation at extreme temperature (60°C and 150 rpm). Samples were taken after 2, 24, and 48 hr from incubation. The amount of quaternized polysaccharide migrated from the films was evaluated by Lugol's solution in spectrophotometer at 550 nm.

### Example 1: Antibacterial activity of films containing Q-potato starch

5% Q-potato starch was integrated into two different polyethylene (PE) polymers: LDPE Ipethene 600 and 94% Affinity 1880+1% Bondyram 7103 and films were prepared, as described in the methods. Control films from each of the PE polymer materials were produced by the same procedure without the Q-potato starch. The films were tested for their antimicrobial (AM) properties against *E. coli* (ATCC 8739- H) and *L. innocua* (ATCC 33090), using methods known in the art, i.e., the films were placed with bacteria in solution or on an agar plate and the test evaluated bacterial growth inhibition at several time points in the medium or in the plate, respectively. In addition, the films were tested for their ability to inhibit *L. innocua* biofilm production, meaning that after the films were placed in *L. innocua* environment, their ability to produce biofilm on the PE film itself was evaluated. The AM tests were performed at different time points, up to 12 months from film's production.

The AM test results against *E. coli* in solution are presented in **Table 1.**

**Table 1: Q-potato starch as AM agent: E. coli bacterial reduction in solution**

| | **Average *E. coli* log reduction Levels Bacterial Reduction:0=No, 7=Very High** | | | | |
|---|---|---|---|---|---|
| **Material sample / test time (months)** | | **1.5** | **3** | **4** | **8** |
| 10.3 Q-potato starch-Powder (1mg/ml) | 8 | | | | |
| 10.20 LDPE 600 | | 0 | 0 | 0 | 0 |
| 10.21 LDPE 600 + 5% Q-potato starch | | 7 | 7 | 7 | 7 |
| 10.22 PE Affinity 1880+ 1% Bondyram 7103 | | 0 | 0 | 0 | 0 |
| 10.23 PE Affinity 1880+ 1% Bondyram 7103 + 5% Q-potato starch | | 7 | 7 | 7 | 7 |
| No. of replicates | 3 | 3 | 6 | 2 | 2 |

As can be seen, the films that contain 5% (w/w) of Q-potato starch with both PE polymer materials (samples 10.21 and 10.23) showed excellent AM activity throughout the whole eight months, reducing the bacterial concentration in the solution 7 orders of magnitude compared to a solution of Q-starch without film (sample 10.3). The control films with no starch (samples 10.20 and 10.22) had no effect at all.

The AM activity against *L. innocua* in solution was tested and presented in Table 2.

**Table 2: Q-potato starch as AM agent: L. innocua bacterial reduction in solution**

| | **Average *L. innocua* log reduction Levels Bacterial Reduction:0=No, 7=Very High** | | | | | |
|---|---|---|---|---|---|---|
| **Material sample / test time (months)** | | **2** | **3** | **3*** | **4** | **8** |
| 10.3 Q-potato starch-Powder (1mg/ml) | 6 | | | | | |
| 10.20 LDPE 600 | | 0 | 0 | 0 | 0 | 0 |
| 10.21 LDPE 600 + 5% Q-potato starch | | 4 | 3.5 | 7 | 6 | 6 |
| 10.22 PE Affinity 1880 + 1% Bondyram 7103 | | 0 | 0 | 0 | 0 | 0 |
| 10.23 PE Affinity 1880+ 1% Bondyram 7103 + 5% Q-potato starch | | 3 | 4 | 7 | 6 | 4 |
| No. of replicates | 3 | 3 | 3 | 4 | 2 | 4 |

| | | | | | | |
|---|---|---|---|---|---|---|
| 3* results from a similar experiment conducted in a different lab | | | | | | |

Summarizing the results from **Table 2,** we can say that the AM activity against *L*. *innocua* of films containing Q-potato starch (samples 10.21 and 10.23) was good and showed improvement with time from production.

Inhibition of *L. innocua* biofilm growth by 5% Q-potato starch films was tested and the results are presented in **Table 3.**

**Table 3: Q-potato starch as AM agent: L. innocua biofilm growth inhibition**

| **Material sample / test time (months)** | **Biofilm viability** | | |
|---|---|---|---|
| | **2** | **5** | **8** |
| 10.20 LDPE 600 | 10^{11.0} | 10^{9.5} | 10^{10.5} |
| 10.21 LDPE 600 + 5% Q-potato starch | 10^{6.0} | 10^{6.0} | 10^{6.5} |
| 10.22 PE Affinity 1880 + 1% Bondyram 7103 | 10^{11.0} | 10^{8.5} | 10^{10.5} |
| 10.23 PE Affinity 1880+ 1% Bondyram 7103 + 5% Q-potato starch | 10^{10.0} | 10^{8.5} | 10^{8.0} |
| No. of replicates | 1 | 1 | 3 |

As can be seen, the film 10.21 with LDPE 600 + 5% Q-potato starch demonstrated reduction of 5 orders of magnitude in biofilm viability after two months from film production and reduction of 4 orders of magnitude in biofilm viability after 5 and 8 months from film production, compared to the control films 10.20 and 10.22. The performance of the film 10.23 containing PE Affinity 1880+ 1% Bondyram 7103 + 5% Q-potato starch was somewhat less, i.e. reduction around one order of magnitude in biofilm viability, but it is still a very promising and encouraging result since even one order of magnitude reduction in biofilm viability is very difficult to achieve in commercial AM agents for plastic films.

In addition to the AM tests, the films were tested for their Q-potato starch migration. The migration tests were done after 1, 4, and 8 months from film production. The migration of Q-potato starch was evaluated after immersion in water for 2, 24, and 48 h at two temperatures: 25°C and 60°C. **Figs. 1****,** **2** **and** **3** present Q-potato starch migration from the PE films a month after film production, up to 8 months at 25°C; and up to 8 months at 60°C, respectively.

As can be seen from **Figs. 1-3****,** Q-potato starch release profile from the PE films showed higher release from LDPE 600 films than from Affinity 1880 films at all-time points tested. Moreover, as expected, the migration after 48 h in solution was higher than the migration after 2 h. It is important to indicate that the total migration in all cases tested did not exceed 10 mg/dm², which is the highest limit that can be approved according to the European standard for migration of materials from food packaging.

### Example 2: Antibacterial activity of films containing Q-corn starch

Q-corn starch was integrated into PE Affinity 1880+1% Bondyram 7103 at various concentrations (0.5, 1, 2, 3 and 5%) to make antimicrobial films, as described above. A control film from the PE polymer materials without Q-corn starch was produced by the same procedure as described above. The samples were labeled as 10.22 and 10.25 to 10.29.

The results of *L. innocua* biofilm growth inhibition by the different Q-corn starch films are presented in **Table 4.** All five films containing Q-corn starch at different amounts (samples 10.25 to 10.29) showed reduction between 1.5 to 2 orders of magnitude in biofilm viability after one month from film production and reduction of one order of magnitude in biofilm viability after 4 months from film production, compared to the control film (10.22).

**Table 4: Q-corn starch as AM agent: L. innocua biofilm growth inhibition**

| **Material sample and test time (months)** | **Biofilm viability** | |
|---|---|---|
| | **1** | **4** |
| 10.22 PE Affinity 1880 + 1% Bondyram 7103 | 10^{10.0} | 10^{10.5} |
| 10.25 PE Affinity 1880 +1% Bondyram 7103 + 5% Q-corn starch | 10^{8.5} | 10^{9.5} |
| 10.26 PE Affinity 1880 +1% Bondyram 7103 + 3% Q-corn starch | 10^{8.5} | 10^{8.8} |
| 10.27 PE Affinity 1880 +1% Bondyram 7103 + 2% Q-com starch | 10^{8.0} | 10^{9.8} |
| 10.28 PE Affinity 1880 +1% Bondyram 7103 + 1% Q-corn starch | 10^{8.0} | 10^{9.8} |
| 10.29 PE Affinity 1880 +1% Bondyram 7103 + 0.5% Q-corn starch | 10^{8.0} | 10^{9.0} |
| No. of replicates | 1 | 3 |

The films were tested for their Q-corn starch migration. The migration tests were done after 1 and 4 months from film production. The migration of Q-corn starch was evaluated after immersion in water for 2, 24, and 48 h at two temperatures: 25°C and 60°C. **Figs. 4A-4D** present the migration of Q-corn starch from the different PE films. As can be seen from **Figs. 4A-4D****,** Q-corn starch migration at various temperatures and for various durations did not exceed 10 mg/dm², the maximum permitted according to the European standard for migration of materials from food packaging.

### Example 3: Antibacterial activity of films containing various quaternized polysaccharides at various concentrations

Q-potato starch, Q-corn starch, Q-amylose and Q-dextrin were integrated into LDPE 600 at various concentrations (0.5, 2.5, and 5%) to make antimicrobial films, as described above. A control film from the same LDPE 600 polymer materials without polysaccharide was produced by the same procedure as described above.

The results of *E. coli or L. innocua* bacterial reduction and *L. innocua* biofilm growth inhibition after 1 month by the different films are presented in **Table 5.** As can be seen from **Table 5,** at a concentration of 0.5% the antimicrobial activity was overall quite low, except for Q-potato starch, which showed good results. However, concentrations of 2.5 and 5% showed excellent reduction of bacterial levels for all four films tested. Q-amylose, Q-potato starch and Q-corn starch reduced the biofilm viability by at least one order or magnitude, except for 0.5% of Q-amylose and Q-corn starch, and Q-dextrin did not appear to reduce viability of the biofilm, compared to the control.

**Table 5: various Q-polysaccharides as AM agents**

| **Active compound** | **Log Levels of bacterial reduction (E.coli)** | **Log Levels of bacterial reduction (Listeria)** | **Biofilm viability (average viable count)** |
|---|---|---|---|
| 0.5% Q-potato dextrin* | 7 | 7/1.5 | 10^{8.3} |
| 2.5% Q-potato dextrin* | 7 | 7 | 10^{8.5} |
| 5% Q-potato dextrin* | 7 | 7 | 10^{8.5} |
| 0.5% Q-potato starch | 7 | 7 | 10^{7.5} |
| 2.5% Q-potato starch | 7 | 7 | 10^{7.3} |
| 5% Q-potato starch | 7 | 7 | 10^{7.5} |
| 0.5% Q-corn starch | 0 | 7 | 10^{9.7} |
| 2.5% Q-corn starch | 7 | 2 | 10^{7.4} |
| 5% Q-corn starch | 7 | 7 | 10^{7.5} |
| 0.5% Q-corn amylose* | 7 | 0 | 10^{8.7} |
| 2.5% Q-corn amylose* | 7 | 7 | 10^{5.1} |
| 5% Q-corn amylose* | 7 | 7 | 10^{7.2} |
| LDPE 600 (control) | 0 | 0 | 10^{8.4} |
| No. of replicates | 2 | 2 | 2 |

| | | | |
|---|---|---|---|
| *not according to the invention | | | |

### Example 4: Antibacterial activity of nonwoven fabrics soaked with Q-potato starch

Nonwoven fabrics are broadly defined as sheet or web structures bonded together by entangling fiber or filaments (and by perforating films) mechanically, thermally or chemically, and are usually made from a polypropylene or polypropylene/polyethylene blend. They are flat or tufted porous sheets that are made directly from separate fibers, molten plastic or plastic film. They are not made by weaving or knitting and do not require converting the fibers to yarn. Nonwoven fabrics are engineered fabrics that may have a limited life, single-use fabric or can be very durable fabrics. Nonwoven fabrics provide specific functions such as absorbency, liquid repellence, resilience, stretch, softness, strength, flame retardancy, washability, cushioning, thermal insulation, acoustic insulation, filtration, use as a bacterial barrier and sterility. These properties are often combined to create fabrics suited for specific jobs, while achieving a good balance between product use-life and cost. They can mimic the appearance, texture and strength of a woven fabric and can be as bulky as the thickest padding. In combination with other materials they provide a spectrum of products with diverse properties, and are used alone or as components of apparel, home furnishings, health care, engineering, industrial and consumer goods, and hygiene industry (baby care, feminine care, and adult incontinence products).

To produce antimicrobial nonwoven fabrics, solutions containing 0.5%, 1% and 1.5% (w/w) Q-potato starch in water were used, and spunbond nonwoven polypropylene fabrics (size of A4) were dipped in the Q-potato starch-containing solutions and hung out to dry. The fabrics were tested for antimicrobial activity after one month by the same methods used for testing antimicrobial films, as described in Examples 1 and 2.

**Table 6: Q-potato starch as AM agent: bacterial reduction in solution:**

| **Material sample** | **Average log reduction Levels: Bacterial Reduction: 0= No, 7=Very High** | |
|---|---|---|
| | ***E. coli*** | ***L. innocua*** |
| Nonwoven fabric in 0.5% Q-potato starch solution | 7 | 6.6 |
| Nonwoven fabric in 1% Q-potato starch solution | 7 | 6.6 |
| Nonwoven fabric in 1.5% Q-potato starch solution | 7 | 6.6 |
| Nonwoven fabric with no additive | 0 | 0 |
| No. of replicates | 2 | 2 |

**Table 7: Q-potato starch as AM agent: L. innocua biofilm growth inhibition:**

| **Material sample** | **Biofilm viability** |
|---|---|
| Nonwoven fabric in 0.5% Q-potato starch solution | 10^{7.7} |
| Nonwoven fabric in 1% Q-potato starch solution | 10^{7.5} |
| Nonwoven fabric in 1.5% Q-potato starch solution | 10^{7.5} |
| Nonwoven fabric with no additive | 10^{8.5} |
| No. of replicates | 3 |

According to Q-potato starch results, very high bacterial reduction in solution for both *E. coli* and *L. innocua,* was achieved. In addition, it can be seen that there is a reduction in biofilm viability of one order of magnitude, which is a very good.

The fabrics were also tested for their Q-potato starch migration. The migration tests were done 1 month from antimicrobial fabric production. The migration of Q-potato starch was evaluated after immersion in water for 2 or 24 h at room temperature. As can be seen from **Fig. 5****,** which presents the migration of Q-potato starch from the different fabrics, Q-potato starch migration did not exceed 10 mg/dm², the maximum permitted according to the European standard for migration of materials from food packaging.

### Example 5 (not according to the invention): Antibacterial activity of nonwoven fabrics soaked with Q-dextrin

To produce antimicrobial nonwoven fabrics, solutions containing 1%, 2% and 3% (w/w) Q-dextrin in water were used, and nonwoven polypropylene fabrics (size of A4) were dipped in the Q-dextrin-containing solutions and hung out to dry. The fabrics were tested for antimicrobial activity after one month by the same methods used for testing antimicrobial films, as described in Examples 1 and 2.

**Table 8: Q-dextrin as AM agent: bacterial reduction in solution:**

| **Material sample** | **Average log reduction Levels: Bacterial Reduction: 0= No, 7=Very High** | |
|---|---|---|
| | ***E. coli*** | ***L. innocua*** |
| Nonwoven fabric in 1% Q-dextrin solution | 7 | 6.6 |
| Nonwoven fabric in 2% Q-dextrin solution | 7 | 6.6 |
| Nonwoven fabric in 3% Q-dextrin solution | 7 | 6.6 |
| Nonwoven fabric with no additive | 0 | 0 |
| No. of replicates | 2 | 2 |

**Table 9: Q-dextrin as AM agent: L. innocua biofilm growth inhibition:**

| **Material sample** | **Biofilm viability** |
|---|---|
| Nonwoven fabric in 1% Q-dextrin solution | 10^{10.4} |
| Nonwoven fabric in 2% Q-dextrin solution | 10^{7.6} |
| Nonwoven fabric in 3% Q-dextrin solution | 10^{8.5} |
| Nonwoven fabric with no additive | 10^{8.5} |
| No. of replicates | 3 |

According to Q-dextrin results, very high bacterial reduction in solution for both *E. coli* and *L. innocua,* were achieved. No significant reduction in biofilm viability was observed.

The fabrics were also tested for their Q-dextrin migration. The migration tests were done 1 month from antimicrobial fabric production. The migration of Q-dextrin was evaluated after immersion in water for 2 or 24 h at room temperature. As can be seen from **Fig. 6****,** which presents the migration of Q-dextrin from the different fabrics, Q-dextrin migration did not exceed 10 mg/dm², the maximum permitted according to the European standard for migration of materials from food packaging.

### REFERENCES

Ebringerova A., Belicova A., Ebringer L., Antimicrobial activity of quaternized heteroxylans. World J. microbiology & Biotechnology 10 (1994) 640-644.
Kong M., Chen X. G., Xing K., Park H. J., Antimicrobial properties of chitosan and mode of action: A state of the art review. International Journal of Food Microbiology 144 (2010) 51-63.
Kanatt S. R., Rao M.S., Chawla S.P., Sharma A., Active chitosan-polyvinyl alcohol films with natural extracts. Food Hydrocolloids 29 (2012) 290-297.
Park S., Marsh K. S., Dawson P., Application of chitosan-incorporated LDPE film to sliced fresh red meats for shelf life extension. Meat Science 85 (2010) 493-499.
Tripathi S., Mehrotra G.K., Dutta P.K., Physicochemical and bioactivity of cross-linked chitosan-PVA film for food packaging applications. International Journal of Biological Macromolecules 45 (2009) 372-376.
Bastarrachea L., Dhawan S., Sablani S.S., Engineering Properties of Polymeric-Based Antimicrobial Films for Food Packaging. Food Engineering Reviews 3 (2011) 79-93.

## Claims

1. An antimicrobial article comprising quaternized starch incorporated into a synthetic organic polymer material.

2. The antimicrobial article of claim 1, wherein the quaternized starch is present in the antimicrobial article at a concentration of 0.1% to 20% w/w.

3. The antimicrobial article of claim 1, selected from a polymer film or sheet or a food packaging article produced from said polymer film or sheet.

4. The antimicrobial article of claim 1, wherein said polymer material is selected from polyethylene, polypropylene, metallocene-polyethylene (mPE), and mPE grafted maleic anhydride, or a combination thereof.

5. The antimicrobial article of claim 4, where said quaternized starch is quaternized corn or potato starch.

6. A method for manufacturing an anti-microbial article, the method comprising preparing an antimicrobial composition by incorporating quaternized starch into a synthetic organic polymer material, and producing an article from said antimicrobial composition.

7. The method of claim 6, wherein the antimicrobial composition has a quaternized starch concentration of 0.1% to 20% w/w.

## Patentansprüche

1. Antimikrobielles Erzeugnis, umfassend quaternisierte Stärke, die in ein synthetisches organisches Polymermaterial eingelagert ist.

2. Antimikrobielles Erzeugnis nach Anspruch 1, wobei die quaternisierte Stärke in dem antimikrobiellen Erzeugnis in einer Konzentration von 0,1 bis 20 Gew.-% vorliegt.

3. Antimikrobielles Erzeugnis nach Anspruch 1, ausgewählt aus einem/einer Polymerfilm oder -folie, oder ein Nahrungsmittelverpackungserzeugnis, das aus dem/der Polymerfilm oder -folie hergestellt wurde.

4. Antimikrobielles Erzeugnis nach Anspruch 1, wobei das Polymermaterial aus Polyethylen, Polypropylen, Metallocenpolyethylen (mPE) und mPE-gepfropftem Maleinsäureanhydrid oder einer Kombination davon ausgewählt ist.

5. Antimikrobielles Erzeugnis nach Anspruch 4, wobei die quaternisierte Stärke quaternisierte Mais- oder Kartoffelstärke ist.

6. Verfahren zur Herstellung eines antimikrobiellen Erzeugnisses, wobei das Verfahren das Zubereiten einer antimikrobiellen Zusammensetzung durch Einlagern quaternisierter Stärke in ein synthetisches organisches Polymermaterial und Herstellen eines Erzeugnisses aus der antimikrobiellen Zusammensetzung umfasst.

7. Verfahren nach Anspruch 6, wobei die antimikrobielle Zusammensetzung eine Konzentration an quaternisierter Stärke von 0,1 bis 20 Gew.-% aufweist.

## Revendications

1. Objet antimicrobien comprenant de l'amidon quaternisé incorporé dans un matériau polymère organique synthétique.

2. Objet antimicrobien selon la revendication 1, dans lequel l'amidon quaternisé est présent dans l'objet antimicrobien à une concentration de 0,1 % à 20 % p/p.

3. Objet antimicrobien selon la revendication 1, choisi parmi un film ou une feuille de polymère ou un objet d'emballage alimentaire produit à partir dudit film ou feuille de polymère.

4. Objet antimicrobien selon la revendication 1, dans lequel ledit matériau polymère est choisi parmi le polyéthylène, le polypropylène, le métallocène-polyéthylène (mPE) et l'anhydride maléique greffé au mPE, ou une combinaison de ceux-ci.

5. Objet antimicrobien selon la revendication 4, où ledit amidon quaternisé est l'amidon quaternisé de maïs ou de pomme de terre.

6. Procédé de fabrication d'un objet antimicrobien, le procédé comprenant la préparation d'une composition antimicrobienne par incorporation d'amidon quaternisé dans un matériau polymère organique synthétique, et la production d'un objet à partir de ladite composition antimicrobienne.

7. Procédé selon la revendication 6, dans lequel la composition antimicrobienne présente une concentration en amidon quaternisé de 0,1 % à 20 % p/p.
